# FASCICULE DE BREVET EUROPEEN

(11) **EP 0 366 541 B1**
(45) Date de publication et mention de la délivrance du brevet: **22.09.1993**
(21) Numéro de dépôt: 89402930.5
(22) Date de dépôt: 24.10.1989
(51) Int. Cl.: A23C 9/142

(54) **Procédé pour la préparation d'un nouveau produit alimentaire, à base de rétentat d'ultrafiltration de lait et ledit produit alimentaire**
Verfahren zur Herstellung eines Nahrungsmittels auf der Basis von Milch-Ultrafiltrationsretentat und dieses Nahrungsmittel
Process for preparing a food product based on an ultrafiltration retentate of milk, and this food product

(30) Priorité: 24.10.1988 FR 8813899
(43) Date de publication de la demande: 02.05.1990
(73) Titulaire: COMPAGNIE LAITIERE EUROPEENNE SCA, F-50890 CONDE-sur-VIRE (FR)
(72) Inventeur: Le Treut, Jean Hervé, F-50000 Saint-Lo (FR); Denier D'Aprigny,Philippe, F-50000 Saint-Lo (FR)
(74) Mandataire: Le Roux, Martine

(56) Documents cités:
- EP-A- 0 165 105
- DE-A- 2 627 460
- DE-A- 3 710 152
- FR-A- 2 587 174
- LE LAIT, vol. 57, 1977, pages 646-662; A. PIERRE et al.: "Influence des traitements thermiques sur les propriétés physicochimiques des retentats obtenus par ultrafiltration de lait de vache et de lait de chèvre"

## Description

La présente invention a pour objet un procédé pour la préparation d'un nouveau produit alimentaire, à base de rétentat d'ultrafiltration de lait.

Le produit obtenu par ledit procédé est nouveau. Il constitue donc en lui-même un autre objet de la présente invention.

On a, depuis un certain nombre d'années déjà, mis en oeuvre des techniques d'ultrafiltration dans les industries laitières et fromagères.

Dans la demande de brevet FR-A-2 052 121, on décrit notamment un procédé conduisant, par ultrafiltration de lait, à un concentrat de protéines -pré-fromage liquide- que l'on destine à la fabrication de fromages, par addition en son sein de substances appropriées (présure, levain lactique, sel, ...). Dans la demande de brevet FR-A-2 461 461, on décrit également la préparation de fromages à partir de rétentat d'ultrafiltration foisonné, cette préparation faisant aussi intervenir de la présure. Par ailleurs, on peut préparer certains autres types de fromages -dits fromages fondus- en faisant intervenir dans des rétentats d'ultrafiltration des sels de fonte. Ceci est notamment illustré dans la demande DE-A-37 10 152.

Dans la demande de brevet FR-A-2 587 174, on décrit une autre utilisation du concentrat de lait, obtenu par ultrafiltration. A celui-ci, on ajoute une certaine quantité de sucre et en chauffant le mélange, on obtient un produit alimentaire connu sous la dénomination "confiture de lait".

On a également décrit, dans le brevet US 4,497,834, un procédé de préparation d'un produit alimentaire -type pâte à tartiner- à partir de lait. Ce procédé est basé sur une étape de concentration du lait par évaporation sous vide et sur la cuisson du concentrat de lait ainsi obtenu. Pour éviter la granulation du produit final due à la cristallisation du lactose, on doit réduire, au cours du procédé, la concentration du produit en ledit lactose. Cette opération de délactosage est avantageusement réalisée, sur le lait, par hydrolyse enzymatique (lactase), par ultrafiltration ou tamisage moléculaire ou par dilution.

Selon l'invention, on propose une nouvelle utilisation du concentrat de lait, obtenu par ultrafiltration; on propose un procédé d'élaboration de nouveaux produits alimentaires type terrines à partir d'un lait d'origine animale.

Le procédé de l'invention comporte deux étapes principales.

La première étape consiste à concentrer par ultrafiltration un lait d'origine animale, cette concentration étant éventuellement conjuguée à une diafiltration.

La seconde étape consiste à traiter thermiquement, à une température maximale de 100°C, le rétentat d'ultrafiltration obtenu à l'issue de la première étape. Ledit rétentat contient les protéines natives du lait de départ. Sous l'action de la chaleur, ledit rétentat -et notamment ses protéines- coagule. Selon l'intensité et la durée dudit traitement thermique, cette coagulation est plus ou moins prononcée.

Eventuellement et de façon avantageuse, le procédé de l'invention comporte une troisième étape qui consiste en l'addition d'un ou plusieurs ingrédients de qualité alimentaire dans ledit rétentat d'ultrafiltration, avant et/ou pendant et/ou après ledit traitement thermique. Le ou lesdits ingrédient(s) doit (doivent) intervenir dans des conditions telles qu'il(s) ne perturbe(nt) ni ne modifie(nt) la thermocoagulation dudit rétentat.

En d'autres termes, lesdits ingrédients doivent notamment être choisis et intervenir dans des quantités et dans un milieu tels qu'ils n'influent pas sur le phénomène de coagulation du rétentat sous l'effet de la chaleur.

La première étape du procédé de l'invention consiste en l'obtention d'un rétentat d'ultrafiltration de lait, plus précisément en la concentration d'un lait d'origine animale par ultrafiltration.

Cette étape de concentration est connue de l'homme de métier. Elle est présentement mise en oeuvre à partir d'un lait entier ou écrémé, avantageusement standardisé à un certain pourcentage en matières grasses. Elle est mise en oeuvre, selon l'invention, pour l'obtention d'un rétentat plus ou moins concentré. Le taux de concentration volumique souhaité est avantageusement compris entre 4 et 7, cette dernière valeur étant préférée. On peut toutefois obtenir des produits selon l'invention en faisant thermocoaguler des rétentats d'ultrafiltration moins concentrés. Par exemple, on peut très bien, selon l'invention, faire thermocoaguler des rétentats d'ultrafiltration dont le taux de concentration volumique n'est que de 2 ou 3. Avantageusement, on incorpore alors dans ceux-ci des émulsifiants, épaississants ou gélifiants qui jouent le rôle d'agents de texture. Le taux de concentration volumique du rétentat d'ultrafiltration est un des paramètres qui permet de modifier la consistance du produit final.

Avantageusement, la seconde étape du procédé de l'invention est mise en oeuvre avec un rétentat d'ultrafiltration contenant de 200 à 450 g/kg de matières sèches.

Comme indiqué ci-dessus, cette étape de concentration par ultrafiltration est éventuellement conjuguée à une diafiltration. Le rétentat d'ultrafiltration alors obtenu est partiellement délactosé. Cette opération de délactosage est réalisée, selon l'invention, en continu, parallèlement à l'étape de concentration par ultrafiltration.

Cette technique simplifie la technologie et évite d'avoir recours à d'autres méthodes ponctuelles de délactosage.

En principe, elle fait intervenir au moins deux modules d'ultrafiltration et entre ceux-ci, le rétentat d'ultrafiltration est re-diulé avec de l'eau. La quantité de lactose éliminée est évidemment proportionnelle à la quantité d'eau rajoutée et au taux de concentration du rétentat traité sur le premier module.

Sa mise en oeuvre, dans le procédé de l'invention, n'est nullement obligatoire. On obtient, selon l'invention, sans difficulté particulière, des produits consommables avec des rétentats d'ultrafiltration présentant des teneurs en lactose de 42 - 44 g/l. De tels produits ont une texture caractéristique. En effet, on a montré selon l'invention que la texture, la consistance et l'aspect des produits finaux -rétentats thermocoagulés-variaient avec le taux de lactose du rétentat à coaguler.

On insistera présentement sur le fait que le rétentat d'ultrafiltration obtenu contient les protéines natives du lait de départ et que, selon l'invention, lesdites protéines ne seront transformées -modification physico-chimique- que sous la seule action de la chaleur. Il n'y a pas d'interaction avec d'autres substances, présentes dans le rétentat d'ultrafiltration, pendant le traitement thermique.

Ledit traitement thermique constitue la seconde étape du procédé de l'invention. Il assure la thermocoagulation, au moins partielle du rétentat d'ultrafiltration obtenu à la première étape dudit procédé. Il doit être réalisé à une température inférieure ou égale à 100°C. Une température excessive conduirait à l'obtention de produits inintéressants : non stables, de texture farineuse...

Avantageusement, entre l'ultrafiltration et le traitement thermique, on ajuste si nécessaire le pH du rétentat d'ultrafiltration entre 6 et 7, de préférence entre 6,3 et 6,7.

Il convient que ledit pH ne soit pas trop faible : on observerait alors une séparation bi-phasique du milieu.

La valeur dudit pH est ajustée en vue de l'optimisation de la texture du produit final.

Généralement, on ajoute à cette fin, dans le rétentat d'ultrafiltration une faible quantité de ferments lactiques que l'on laisse agir pendant 30 minutes à 2 heures.

Comme indiqué ci-dessus, ledit traitement thermique peut être mis en oeuvre pour n'assurer qu'une coagulation partielle du rétentat. On obtient ainsi des produits pâteux, que l'on pourraît dénommer "pré-terrines" en opposition aux produits plus consistants dits "terrines" qui sont obtenus après une coagulation à température plus élevée et/ou temps de contact plus long. De tels produits -"pré-terrines"- éventuellement fourrés, peuvent être mis directement sur le marché. Avant consommation, ils seront avantageusement cuits ...

La thermocoagulation du rétentat d'ultrafiltration est réalisée par chauffage de celui-ci.

Ce chauffage peut consister en un chauffage discontinu, en batch ou en un chauffage en continu.

Selon une variante de l'invention, le rétentat d'ultrafiltration, dans lequel on aura éventuellement incorporé des ingrédients, est coulé dans un moule et mis au four.

Selon d'autres variantes, ledit rétentat peut être cuit de manière plus sophistiquée, par exemple par cuisson-extrusion ou sous vide.

Le programme en température du chauffage peut être très varié. Ce chauffage peut être réalisé par paliers successifs.

On peut, à titre indicatif, préciser que le chauffage a généralement lieu à une température comprise entre 60 et 100°C, pendant 1 à 8 heures, lorsque l'on souhaite une thermocoagulation complète du rétentat.

On préfèrera généralement un chauffage long et à plus faible température. Le produit obtenu y gagne en flaveur.

On peut, par exemple, chauffer un rétentat vers 70°C pendant environ 7 heures. On obtiendra une terrine consistante.

Toutefois, dans certaines hypothèses, on mettra en oeuvre un chauffage rapide, à forte température par exemple pour obtenir un produit du type "longue conservation".

La modulation des paramètres du chauffage -temps, température- est à la portée de l'homme du métier, qui aura pour objectif la préparation de tel ou tel type de produits.

Après chauffage, le rétentat d'ultrafiltration est ramené à température ambiante. Il peut être refroidi en-dessous de celle-ci.

La floculation des protéines se termine au cours dudit refroidissement.

Un fort refroidissement peut être souhaité pour éviter une contamination du produit par les germes.

En ce qui concerne la troisième étape du procédé de l'invention, on a vu qu'elle était facultative. En effet, on peut obtenir des produits intéressants en eux-mêmes, en tant que substance nutritive à partir d'un rétentat d'ultrafiltration "pur". De tels produits sont du type "terrine neutre". De telles terrines peuvent toutefois avoir été obtenues par coagulation d'un rétentat d'ultrafiltration dans lequel on aurait seulement incorporé des agents de texture -émulsifiants, épaississants, gélifiants- tels que par exemple des protéines, des polysaccharides.

Selon une variante intéressante du procédé de l'invention, on fait intervenir dans celui-ci au moins un ingrédient de qualité alimentaire. L'incorporation de substance(s) au sein du rétentat peut évidemment avoir lieu après le traitement thermique de celui-ci. Avantageusement, elle a lieu avant et/ou pendant celui-ci. On obtient alors des terrines contenant lesdites substances, terrines dont la base est constituée du rétentat d'ultrafiltration thermocoagulé.

On peut ajouter avant la thermocoagulation, afin d'alléger le produit final, des fibres d'origine végétale ou autres composants tolérés par la législation, ainsi que des ingrédients de substitution de la matière grasse suivant des techniques bien connues en charcuterie de viande, poisson, légume.

On peut aussi ajouter, selon une autre variante, un complément de matières grasses.

A titre d'exemple d'ingrédients pouvant être incorporés selon l'invention dans le rétentat d'ultrafiltration, on citera :
- le sel,
- les arômes,
- les arômates;
- le sucre,
- le chocolat,
- les morceaux de viande ; de poisson ; de crustacés ; d'abats ; de champignons ; de fruits ; de légumes frais ou secs ...

Ces différents ingrédients peuvent intervenir en mélange ou séparément. On peut, par des choix judicieux, obtenir des terrines salées, plus spécialement destinées à être consommées en apéritif ou en entrée ou des terrines sucrées, plus spécialement destinées à être consommées en dessert. De telles terrines sucrées peuvent avantageusement servir de matières premières pour l'industrie de la pâtisserie, de la confiserie.

Lesdits ingrédients n'interviennent que comme marquant, agent de flaveur, agent de texture, garniture ... et ne réagissent en aucune façon avec les constituants du rétentat d'ultrafiltration notamment les protéines natives du lait. Ainsi, lorsque du sucre intervient, il n'intervient que comme agent de flaveur. Les conditions opératoires du procédé de l'invention sont telles que l'effet Maillard ne se produit pas, effet Maillard qui intervient dans la préparation de la "confiture de lait".

Lesdits ingrédients, au cours du traitement thermique sont cuits.

Selon une variante du procédé de l'invention, le rétentat d'ultrafiltration, qui contient éventuellement des ingrédients de qualité alimentaire, est travaillé mécaniquement avant et/ou pendant et/ou après le traitement thermique.

Ce travail mécanique consiste par exemple en un foisonnement par gaz : air, azote ...

On obtient alors des produits plus légers, de type mousse.

Ces mousses peuvent, elles aussi, contenir de la viande, du poisson, des fruits, légumes ...

Selon d'autres variantes du procédé de l'invention, on peut re-texturer les produits finaux obtenus -rétentats d'ultrafiltration traités thermiquement-. On peut également préparer des terrines composées.

De telles terrines composées consistent par exemple en des terrines multi-couches, chaque couche présentant une spécificité au niveau texture, parfum ou garniture. Les couches peuvent être constituées avant le traitement thermique.

On peut également obtenir des terrines composées en mettant en oeuvre des produits finis selon l'invention, par extrusion et co-extrusion.

En conclusion, on insistera sur le fait que le procédé de l'invention peut être mis en oeuvre selon de nombreuses variantes et autorise donc la préparation d'une gamme importante de nouveaux produits alimentaires.

Il propose de nouveaux débouchés au concentrat de lait obtenu par ultrafiltration.

Les nouveaux produits ainsi obtenus constituent un autre objet de la présente invention.

Ils ne consistent pas en des fromages, ni en spécialités fromagères. Ils sont à base de rétentat d'ultrafiltration de lait d'origine animale, soumis à une action thermique. Ledit rétentat, thermocoagulé, constitue une terrine laitière comestible, qui peut avantageusement être parfumée, garnie.

On rappelera que, selon les variantes de mise en oeuvre du procédé, il est possible d'obtenir des terrines, plus ou moins compactes, des "pré-terrines", des terrines composées, des mousses... garnies ou non.

A titre illustratif, on propose ci-après quelques exemples de la mise en oeuvre du procédé de l'invention.

### Exemple de préparation d'un rétentat d'ultrafiltration partiellement délactosé.

Le lait est d'abord pré-concentré à un facteur de concentration volumique (F.C.V.) de 4 et soumis parallèlement à la diafiltration.

L'opération est menée en continu de la façon suivante : le lait est traité sur un ensemble d'ultrafiltration composé de deux modules équipés chacun d'une pompe de circulation, type centrifuge. Entre les deux modules, on trouve un ensemble de diafiltration comprenant un bac d'alimentation en eau et son circuit, un système de régulation et de contrôle. Sur le premier module, le lait est concentré à un F.C.V. de 2.

A l'entrée du second module, juste avant la pompe de circulation, on injecte l'eau de diafiltration afin d'amener le rétentat à la concentration initiale du lait (F.C.V. = 1). Ledit rétentat ainsi redilué passe sur le second module où il est concentré à un F.C.V. de 4.

Sa composition est alors la suivante :

| | |
|---|---|
| - matière sèche totale | 290 g/kg |
| - matière azotée totale | 125 g/kg |
| - lactose | 18 g/kg |

Cette opération peut, par exemple, être menée sur des modules PASILAC équipés de membranes GR 61 PP (commercialisées par la Société PASILAC), sur des modules Rhône-Poulenc équipés de membranes Iris 3065 ou des modules SFEC équipés de membranes S 252 (ces deux derniers types de modules étant commercialisés par la Société TECHSEP).

Le rétentat, concentré 4 fois, est alors soumis à une seconde ultrafiltration dite de finition à un F.C.V. de 7.

L'opération est menée en continu sur un (ou plusieurs) modules(s) équipé(s) d'une pompe de circulation type volumétrique.

Les modules utilisés sont par exemple des modules SFEC avec membrane S 151 (commercialisés par la Société TECHSEP) ou des modules PASILAC avec membrane GR 61 PP (commercialisés par la Société PASILAC).

Les caractéristiques de composition du produit final sont alors les suivantes :

| | |
|---|---|
| - matière sèche totale | 380 g/kg |
| - matière azotée totale | 190 g/kg |
| - lactose | 12 g/kg |

### EXEMPLE 1

Un lait de vache standardisé à 28 g/l de matières grasses est soumis à une ultrafiltration, couplée à une opération de diafiltration, suivant une méthode du type de celle décrite ci-dessus.

La composition du rétentat d'ultrafiltration obtenu est la suivante :

| | |
|---|---|
| - matière sèche totale | 400 g/kg |
| - matière azotée totale | 200 g/kg |
| - lactose | 12 g/kg |
| - matière grasse | 190 g/kg |

Ce rétentat est acidifié à un pH compris entre 6,3 et 6,5 par l'ajout de ferments lactiques.

On ajoute alors à 1 kg dudit rétentat :
- 15 g de sel
- 20 g d'arôme naturel saumon fumé
- 100 g de saumon fumé en fines lamelles
- des épices en poudre

Le mélange du rétentat et de ces divers ingrédients est effectué dans un mélangeur mécanique à 40°C.

Le tout est versé dans une terrine type charcutière. La thermocoagulation du mélange (et la cuisson des ingrédients) est effectuée dans un four. La température y est telle que le coeur du produit est à environ 80-85°C. Le produit est maintenu à cette température entre 2 et 5 heures, suivant la consistance désirée pour le produit fini.

Après refroidissement à température ambiante, ledit produit est conservé au réfrigérateur à une température de 4°C.

Le produit obtenu est alors comparable à une terrine ou à un "paté" type charcutier. Il est destiné à être consommé tel quel en entrée ou découpé en dés comme garniture de diverses salades composées.

### EXEMPLE 2

On utilise une base (rétentat d'ultrafiltration) de même composition que celle de l'exemple 1.

Elle est divisée en trois parties :
- la première partie est maintenue à 40°C
- la seconde est refroidie à 20°C
- la troisième est refroidie à 4°C.

A la première partie, on ajoute par kg de rétentat :
- 15 g de sel
- 20 g d'arôme naturel fruits de mer
- 100 g de corail de coquilles St Jacques coupé en morceaux
- des épices
- 5 g de poudre de tapioca.

A la seconde partie, on ajoute par kg de rétentat :
- 15 g de sel
- 20 g d'arôme naturel fruits de mer
- 100 g de noix de coquilles St Jacques coupée en morceaux
- des épices.

A la troisième partie, on ajoute par kg de rétentat :
- 15 g de sel
- 2 blancs d'oeuf
- 150 g de carottes coupées en dés fins.

On coule successivement dans une terrine :
- au fond la partie refroidie à 4°C : base carottes
- puis celle refroidie à 20°C : base noix de coquilles St Jacques
- enfin, celle maintenue à 40°C : base corail de coquilles St Jacques.

La thermocoagulation (et cuisson des ingrédients) est effectuée dans les mêmes conditions que pour l'exemple 1.

On obtient un produit tri-couche, destiné à être consommé principalement en entrée froide.

### EXEMPLE 3

Un lait de vache standardisé à 19 g/l de matières grasses est soumis à une ultrafiltration, couplée à une opération de diafiltration, suivant une méthode du type de celle décrite ci-dessus.

La composition du rétentat d'ultrafiltration obtenu est la suivante :

| | |
|---|---|
| - matière sèche totale | 370 g/kg |
| - matière azotée totale | 180 g/kg |
| - lactose | 20 g/kg |
| - matière grasse | 150 g/kg |

Son pH est ajusté à 6,30 - 6,40 par l'emploi de ferments lactiques.

Le rétentat est chauffé progressivement à 40°C.

On y ajoute avant chauffage 1 % d'agent de texture (carraghénane). On chauffe à 65^{o}C et on ajoute par kg de rétentat :
- 150 g de chocolat noir en morceaux préalablement fondu
- 10 g d'arôme chocolat
- 8 g d'arôme noisette
- 100 g de sucre.

La température est portée à 75°C et maintenue pendant 50 minutes. On ajoute en fin de cuisson 30 g de poudre de noisette. Le produit est coulé dans des pots et refroidi d'abord à 20°C, puis à 4°C.

On obtient une pâte à tartiner chocolatée riche en protéines.

### EXEMPLE 4

Un lait de vache standardisé à 30 g/l de matières grasses est soumis à ultrafiltration, associée à une opération de diafiltration suivant une méthode du type de celle décrite ci-dessus.

La composition du rétentat d'ultrafiltration obtenu est la suivante :

| | |
|---|---|
| - matière sèche totale | 350 g/kg |
| - matière azotée totale | 150 g/kg |
| - lactose | 15 g/kg |
| - matière grasse | 160 g/kg |

La base est légèrement acidifiée à un pH de 6,60 par l'ajout de ferments lactiques.

On ajoute ensuite, par kg de rétentat :
- 100 g de sucre
- 20 g d'arôme orange - fruits de la passion
- 1 g de sel

On coule le mélange liquide dans des boîtes type "conserves".

Les boîtes sont chauffées à 98°C pendant 1 h 30 à 3 h suivant la consistance désirée dans le produit final.

On obtient une pâte arômatisée à tartiner de plus longue conservation destinée à être consommée telle quelle ou bien en gros conditionnement comme matière première pour l'industrie de la pâtisserie, de la confiserie.

### EXEMPLE 5

Un lait de vache standardisé à 20 g/l de matières grasses est soumis à une ultrafiltration associée à une opération de délactosage partiel suivant une méthode du type de celle décrite ci-dessus.

La composition du rétentat d'ultrafiltration obtenu est la suivante :

| | |
|---|---|
| - matière sèche totale | 420 g/kg |
| - matière azotée totale | 210 g/kg |
| - lactose | 25 g/kg |
| - matière grasse | 165 g/kg |

Il est acidifié par l'ajout de ferments lactiques jusqu'à un pH de 6,50.

On ajoute à 1 kg de cette base, 18 g de sel.

Le mélange est chauffé à 72°C et maintenu à cette température pendant 30 à 45 minutes, puis refroidi à 5°C.

On obtient alors un produit pâteux.

On mélange à ce produit pâteux du fromage type Emmental affiné, râpé.

Le mélange est ensuite extrudé pour obtenir des bouchées individuelles de forme boulette, cube, macaron, stick, etc. Il est destiné à être commercialisé sous cette forme. C'est le consommateur qui achèvera la thermocoagulation et effectuera la cuisson dans un four ménager.

Le produit, à la cuisson, boursouffle et prend l'apparence d'une croquette.

Selon une variante, on peut fourrer les bouchées : on prépare, parallèlement à la base pâteuse ci-dessus, une farce composée des éléments suivants :
- béchamel
- champignons de Paris lyophilisés en morceaux
- arôme champignon
- vin blanc sec

Le mélange -farce, base pâteuse- est passé dans un co-extrudeur. On obtient alors des bouchées individuelles fourrées de forme boulette, cube, macaron, stick, etc., dont la carapaceest formée de la base et l'intérieur de la farce. Le produit, à la cuisson, boursouffle et prend l'apparence d'une croquette.

## Revendications

1. Procédé pour la préparation d'un nouveau produit alimentaire du type terrine, caractérisé en ce qu'il consiste essentiellement à :
- concentrer un lait d'origine animale par ultrafiltration, ladite concentration étant éventuellement conjuguée à une diafiltration ;
- traiter thermiquement à une température maximale de 100°C le rétentat d'ultrafiltration obtenu qui contient les protéines natives dudit lait ; ledit traitement thermique assurant la coagulation au moins partielle dudit rétentat ;
- et, éventuellement, ajouter un ou plusieurs ingrédient(s) de qualité alimentaire dans ledit rétentat d'ultrafiltration avant et/ou pendant et/ou après ledit traitement thermique ; le ou lesdits ingrédient(s) intervenant dans des conditions telles qu'il(s) ne perturbe(nt) ni ne modifie(nt) ladite thermocoagulation dudit rétentat.

2. Procédé selon la revendication 1, caractérisé en ce qu'il est mis en oeuvre à partir d'un lait, entier ou écrémé, avantageusement standardisé à un certain pourcentage en matières grasses.

3. Procédé selon l'une des revendications 1 ou 2, caractérisé en ce que, par ultrafiltration, ledit lait d'origine animale est concentré au moins deux fois en volume généralement de quatre à sept fois en volume, de préférence sept fois en volume.

4. Procédé selon l'une des revendications 1 ou 2, caractérisé en ce que le rétentat d'ultrafiltration obtenu contient de 200 à 450 g/kg de matières sèches, généralement de 350 à 450 g/kg.

5. Procédé selon l'une quelconque des revendications précédentes, caractérisé en ce que le pH dudit rétentat d'ultrafiltration a, avant le traitement thermique, une valeur comprise entre 6 et 7, de préférence entre 6,3 et 6,7, après ajustement si nécessaire.

6. Procédé selon l'une quelconque des revendications précédentes, caractérisé en ce que le traitement thermique dudit rétentat d'ultrafiltration est réalisé par chauffage en batch ou en continu.

7. Procédé selon la revendication 6, caractérisé en ce que le chauffage dudit rétentat d'ultrafiltration est réalisé par paliers successifs.

8. Procédé selon l'une des revendications 6 ou 7, caractérisé en ce que le chauffage dudit rétentat d'ultrafiltration est réalisé à une température comprise entre 60 et 100°C pendant 1 à 8 heures.

9. Procédé selon l'une quelconque des revendications précédentes, caractérisé en ce que ledit rétentat d'ultrafiltration est travaillé mécaniquement, par exemple par foisonnement par gaz, avant et/ou pendant et/ou après le traitement thermique.

10. Procédé selon l'une quelconque des revendications précédentes, caractérisé en ce que lesdits ingrédients de qualité alimentaire sont choisis parmi les agents de texture et/ou le sel et/ou les arômes et/ou les arômates et/ou le sucre et/ou le chocolat et/ou les morceaux de viande ; poisson ; crustacés ; abats ; champignons ; fruits ; légumes frais ou secs et/ou les fibres d'origine végétale et/ou les ingrédients de substitution de la matière grasse...

11. Produit alimentaire du type terrine susceptible d'être obtenu par le procédé selon l'une quelconque des revendications 1 à 10.

## Claims

1. Method for preparing a new food product of terrine type, characterized in that it consists essentially in:
- concentrating, by ultrafiltration, a milk of animal origin, said concentration being optionally combined with a diafiltration;
- heat-treating, at a maximum temperature of 100°C, the obtained ultrafiltration retentate which contains the natural proteins from said milk; said heat-treatment ensuring at least partial coagulation of said retentate;
- and, optionally, adding one or more ingredients of edible nature to said ultrafiltration retentate before and/or during and/or after said heat-treatment; said ingredient or ingredients being added in conditions such that they do not affect or alter the thermocoagulation of said retentate.

2. Method according to claim 1, characterized in that it is carried out with whole or skimmed-milk, advantageously standardized to a certain fat content.

3. Method according to one of claims 1 or 2, characterized in that, by ultrafiltration, said milk of animal origin is concentrated at least twice in volume generally between four and seven times, preferably seven times in volume.

4. Method according to one of claims 1 or 2, characterized in that the obtained ultrafiltration retentate contains between 200 and 450 g/kg of dry matter, generaily between 350 and 450 g/kg.

5. Method according to any one of the preceding claims, characterized in that the pH of said ultrafiltration retentate has, before the heat-treatment, a value ranging between 6 and 7, preferably between 6.3 and 6.7, after adjustment if necessary.

6. Method according to any one of the preceding claims, characterized in that the heat-treatment of said ultrafiltration retentate is carried out by continuous or batch heating.

7. Method according to claim 6, characterized in that heating of said ultrafiltration retentate is carried out in successive stages.

8. Method according to one of claims 6 or 7, characterized in that heating of said ultrafiltration retentate is carried out at a temperature between 60 and 100°C for 1 to 8 hours.

9. Method according to any one of the preceding claims, characterized in that said ultrafiltration retentate is worked mechanically, for example by gas-induced swelling, before and/or during and/or after the heat-treatment.

10. Method according to any one of the preceding claims, characterized in that said edible ingredients are selected from the texturing agents and/or salt and/or flavoring agents and/or condiments and/or sugar and/or chocolate and/or pieces of meat; fish; shellfish; offal; mushrooms; fruit; fresh or dry vegetables and/or vegetable fibers and/or fat substitutes...

11. Food product of terrine type capable of being obtained by the method according to any one of claims 1 to 10.

## Patentansprüche

1. Verfahren zur Herstellung eines neuen, pastetenartigen Nahrungsmittels, dadurch gekennzeichnet, daß es insbesondere folgende Phasen umfaßt:
- Tiermilch wird durch Ultrafiltration konzentriert, wobei diese Konzentrierung eventuell mit einer Diafiltration gekoppelt wird;
- das erhaltene Ultrafiltrationsretentat, das die natürlichen Proteine dieser Milch enthält, wird bei einer Höchsttemperatur von 100°C wärmebehandelt, wobei diese Wärmebehandlung für die zumindest partielle Ausflockung des besagten Retentats sorgt;
- und schließlich wird/werden dem genannten Ultrafiltrationsretentat vor/oder während und/oder nach dieser Wärmebehandlung ein oder mehrere eßbare Zusatzstoff/e beigemischt, wobei der/die Zusatzstoff/e unter solchen Bedingungen hinzugefügt wird/werden, daß er/sie die Wärmeausflockung des Retentats weder stört/stören noch verändert/n.

2. Verfahren nach Anspruch 1, dadurch gekennzeichnet, daß es als Grundstoff Voll- oder Magermilch einsetzt, die vorzugsweise Einheitswerte in bezug auf einen bestimmten prozentualen Fettgehalts aufweist.

3. Verfahren nach Anspruch 1 oder 2, dadurch gekennzeichnet, daß die Tiermilch durch Ultrafiltration im Volumen mindestens zweifach, im allgemeinen vier- bis siebenfach, vorzugsweise siebenfach konzentriert wird.

4. Verfahren nach Anspruch 1 oder 2, dadurch gekennzeichnet, daß das erhaltene Ultrafiltrationsretentat 200 bis 450 g/kg, in der Regel 350 bis 450 g/kg Trockensubstanz enthält.

5. Verfahren nach einem der vorstehenden Ansprüche, dadurch gekennzeichnet, daß der pH-Wert des Ultrafiltrationsretentats vor der Wärmebehandlung zwischen 6 und 7, nach einer möglicherweise erforderlichen Einstellung vorzugsweise zwischen 6,3 und 6,7 liegt.

6. Verfahren nach einem der vorstehenden Ansprüche, dadurch gekennzeichnet, daß die Wärmebehandlung des Ultrafiltrationsretentats durch fortlaufendes oder schubweises Erwärmen erfolgt.

7. Verfahren nach Anspruch 6, dadurch gekennzeichnet, daß die Erwärmung des Ultrafiltrationsretentats stufenweise erfolgt.

8. Verfahren nach einem der Ansprüche 6 oder 7, dadurch gekennzeichnet, daß die Erwärmung des Ultrafiltrationsretentats während einer bis acht Stunden bei einer Temperatur zwischen 60 und 100°C stattfindet.

9. Verfahren nach einem der vorstehenden Ansprüche, dadurch gekennzeichnet, daß das Ultrafiltrationsretentat vor und/oder während und/oder nach der Wärmebehandlung mechanisch bearbeitet wird, beispielsweise, indem man es mit Hilfe von Gasen quellen läßt.

10. Verfahren nach einem der vorstehenden Ansprüche, dadurch gekennzeichnet, daß die genannten eßbaren Zusatzstoffe ausgesucht werden unter Strukturmitteln und/oder Salz und/oder Aromen und/oder aromatischen Substanen und/oder Zucker und/oder Schokolade und/oder Stücken von Fleisch, Fisch, Krustentieren, Innereien, Pilzen, Obst, frischen oder getrockneten Gemüsen und/oder pflanzlichen Fasern und/oder Fettersatzstoffen...

11. Pastetenartiges Nahrungsmittel, das mit Hilfe des Verfahrens nach einem der Ansprüche 1 bis 10 erhalten werden kann.
